# EUROPEAN PATENT SPECIFICATION

(11) **EP 3 777 414 B1**
(45) Date of publication and mention of the grant of the patent: **19.06.2024**
(21) Application number: 18716677.2
(22) Date of filing: 28.03.2018
(51) Int. Cl.: H04W 72/12

(54) **URLLC OPTIMIZED SCHEDULING POLICY FOR MULTI-NODE CONNECTIVITY WITH DATA DUPLICATION**
URLLC-OPTIMIERTE PLANUNGSSTRATEGIE FÜR MEHRKNOTEN-KONNEKTIVITÄT MIT DATENDUPLIZIERUNG
POLITIQUE D'ORDONNANCEMENT OPTIMISÉE D'URLLC DE CONNECTIVITÉ MULTI-NOEUDS AVEC DUPLICATION DE DONNÉES

(43) Date of publication of application: 17.02.2021
(73) Proprietor: Nokia Technologies Oy, 02610 Espoo (FI)
(72) Inventor: PEDERSEN, Klaus, 9000 Aalborg (DK); LASELVA, Daniela, 9270 Klarup (DK); MAHMOOD, Nurul, 90120 Oulu (FI)
(74) Representative: TBK
(86) International application number: PCT/IB2018/052136
(87) International publication number: WO 2019/186235

(56) References cited:
- US-A1- 2012 300 710
- US-A1- 2016 226 703
- US-A1- 2017 142 745
- US-B2- 9 253 786

## Description

### TECHNICAL FIELD:

The teachings in accordance with the exemplary embodiments of this invention relate generally to an optimized scheduling policy for multi connectivity operation and, more specifically, relate to an optimized scheduling policy for multi-connectivity operation of user equipment configured for ultra-reliable low latency communication with multi connectivity.

### BACKGROUND:

This section is intended to provide a background or context to the invention that is recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

Certain abbreviations that may be found in the description and/or in the Figures are herewith defined as follows:
- 5QI:: 5G QoS indicator
- ACK:: acknowledgment
- BLER:: block error ratio
- BWP:: bandwidth part
- CC:: component Carrier
- CN:: core network
- CoMP:: coordinated multi-point coordination
- CQI:: channel quality indicator
- DC:: dual connectivity
- eMBB:: enhanced mobile broadband
- EN-DC:: E-Utran-NR DC
- EN-MC:: E-Utran-NR MC
- HARQ:: hybrid automatic repeat request
- IMR:: interference measurement resource
- LTE:: Long Tenn Evolution
- MAC:: medium access control
- MBB:: mobile broadband
- MC:: multi-connectivity
- MCG: master cell group
- MgNB:: master g Node B
- NR:: new radio
- PDCP:: packet data convergence protocol
- PDU:: protocol data unit
- PgNB:: primary g Node B
- QoS:: quality of service
- RLC:: radio link control
- SCG:: secondary cell group
- SgNB:: secondary g Node B
- SINR:: signal-to-interference ratio
- SN:: sequence number
- TTI:: transmission time interval
- URLLC:: ultra-reliable low latency communication
- UTRAN:: universal terrestrial radio access network
- X2:: X2 interface between two eNBs
- Xn:: Xn interface between two gNBs
- QoS: quality-of-service

The 5th Generation (5G) New Radio (NR) communications technology, used in a wide range of spectrums, is designed to expand and support diverse usage scenarios and applications with respect to current mobile network communication technologies. 5G NR communications technology provides enhanced mobile broadband (eMBB) for access to multimedia content, services, and data. In addition, as with other communication technologies such access in 5G is exemplified by ultra-reliable low-latency communications (URLLC). The URLLC having strict requirements for example in terms of latency and reliability for communications by a number of connected devices. As the demand for mobile broadband access continues to increase there exists a need for further improvements of such functionalities in communications technologies such as LTE, 5G, and beyond.

The example embodiments of the invention work to improve such communications.

*Further prior art can be found in document* US 2012/300710*, disclosing distributing L2 baseband processing in a radio network. According to this document, functions for a data link layer are split between an access point and an access controller. The functions performed for uplink and downlink for the data link layer are some but not all of the functions performed by the data link layer to convert information between transport channels and radio bearers. A method according to this document thus comprises converting, in downlink, radio frequency signals received from one or more user equipments into corresponding information on transport channels and converting, in uplink, information on the transport channels into the radio frequency signals suitable to be transmitted to one or more user equipments, the converting comprising performing at least operations for a physical layer; and performing functions, in uplink, for a data link layer on the information on the transport channels to determine packet signals and sending the packet signals over an interface to an access controller, and performing functions, in downlink, for the data link layer on packet signals received over the interface to create the information on the transport channels, the functions in downlink comprising downlink packet scheduling functions and downlink medium access control functions and the functions in uplink comprising uplink packet scheduling functions, wherein the functions performed for uplink and downlink are some but not all of the functions performed by the data link layer to convert information between transport channels and radio bearers.*

### SUM MARY:

*Above mentioned objects are achieved by what is defined in the appended independent claims. Advantageous modifications thereof are set forth in the appended dependent claims.*

### BRIEF DESCRIPTION OF THE DRAWINGS:

The foregoing and other aspects of embodiments of this invention are made more evident in the following Detailed Description, when read in conjunction with the attached Drawing Figures, wherein:
Figure 1 shows dual connectivity for data duplication;
Figure 2 shows an illustration of various devices performing operations showing the resulting prioritization at the MAC scheduler in accordance with an example embodiment of the invention;
Figures 3a and 3b each show a method in accordance with example embodiments of the invention which may be performed by an apparatus; and
Figure 4 shows a high level block diagram of various devices winch can be used in carrying out various aspects of the invention;

### DETAILED DESCRIPTION:

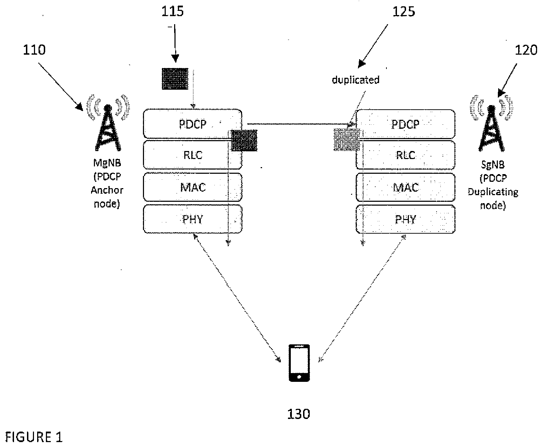

The invention made is disclosed in the embodiment relating to figure 1. The other embodiments discussed refer to not-claimed embodiments.

In this invention, there is proposed an optimized scheduling policy for multiconnectivity of user equipment configured for ultra-reliable low latency communication with dual connectivity.

Dual connectivity (DC), as standardized by 3GPP in LTE Release 12/13, extends the LTE-Advanced Carrier Aggregation (CA) functionality to allow a user equipment (UE) to simultaneously receive/send data from two different eNBs. So far DC has been proposed as a solution to boost the throughput performance, using data split at PDCP layer.

In 5G new radio (NR) standardization activities, DC and multi-connectivity (MC) is standardized as a potential solution for Ultra Reliable Low Latency Communication (URLLC) application with the objective of boosting data robustness and reliability by means of data duplication across the different nodes. It has been agreed to support PDCP packet duplication for the NR to improve reliability in 3GPP NR Rel- 15. This invention is aimed at improving the operation of DC / MC downlink for URLLC.

More specifically, the example embodiments of the invention relate to an optimized gNB scheduling frame work that helps leverage the cost - benefit ratio of using MC with PDCP data duplication. The cost of using this feature is that radio resources are consumed at both the primary and secondary gNBs (denoted PgNB or MgNB and SgNB), while the benefit is the added redundancy of transmitting same data via two independent links (i.e. resulting in lower integral error probability). In order to reduce the cost, example embodiments of the invention at least provide a new scheduling policy to limit the radio resources use in the SgNB to cases where it does not cause queuing delays for other URLLC users.

In URLLC operation the latency budget does not allow transport layer retransmissions. Still, multi-interface diversity can be achieved by duplicating the application's data packets and transmitting those through sockets attached to different radio technology communication interfaces. Latency can be determined by a first arriving packet, and interface diversity with packet duplication (PD) can be used to increase reliability and lower latency in URLLC operation.

Example embodiments of the invention work to create a differentiated scheduling policy for a URLLC UE configured with multi-connectivity using PDCP packet duplication at a PDCP sublayer from an anchor node and a duplicating node. Primary services and functions of the PDCP sublayer for the user plane include sequence Numbering, header compression and decompression, transfer of user data, reordering and duplicate detection (if in order delivery to layers above PDCP is required), PDCP PDU routing (in case of split bearers), retransmission of PDCP SDUs, ciphering and deciphering, PDCP SDU discard, re-establishment, and data recovery, and duplication of PDCP PDUs. In NR operation complete PDCP PDUs can be delivered out-of-order from RLC to PDCP. RLC delivers PDCP PDUs to PDCP after the PDU reassembling. PDCP reordering such as for DC/MC functionality can be enabled if in sequence delivery to layers above PDCP is needed (i.e. even in non-DC case) such as because the packets may not be in order. It is noted that as long as RLC provides in-sequence delivery PDCP does not need to do re-ordering without DC/MC.

Multi-connectivity operation, such as for NR application, with data duplication in the downlink direction is schematically presented in Figure 1. For the sake of simplicity, in the following a DC operation case between two gNBs, will be discussed. The MgNB 110, towards which traffic is terminated from the core network and which is in control of the PDCP duplication is called the PDCP anchor node, whereas any other gNB, e.g., the SgNB 120 of Figure 1, serving the duplicated PDCP packets for a given UE is termed as the PDCP duplicating node or a secondary node. When a packet 115 arrives at the PDCP-anchor gNB 110, it may be duplicated at the PDCP layer and, if so, the duplicated packet 125 is forwarded to one or more PDCP duplicating gNB node(s) over the Xn network interface(s). The same data packet (i.e. PDCP PDU with a given sequence number, SN) is then independently transmitted to the same. The UE 130 through multiple links (the anchor gNB and the duplicating gNBs) communicates the packet communications with the gNB 110 and the SgNB 120. The RLC/MAC/PHY in the MgNB 110 and SgNB 120 operate independently, and thus also RRM functionalities such as scheduling, link adaptation and hybrid ARQ operation are conducted separately within those base station nodes, e.g., MgNB 110 and/or SgNB 120.

In accordance with example embodiments as described herein, the term *duplication set* is used to denote the set of gNBs, i.e., the anchor gNB and the duplicating gNB(s), who can transmit a duplicated packet.

Multi-connectivity, e.g., dual connectivity, with PDCP data duplication offers additional redundancy, thereby lowering the error probability, as errors in the two transmission paths (e.g., from the MgNB and SgNB towards the UE) are typically uncorrelated. The former represents the benefit of using DC with PDCP data duplication for URLLC cases. However, such benefits unfortunately come with a cost. The cost is the usage of radio resources at two gNBs for the same PDUs of one user. In a multi-cell/multi-user system cellular system (such as e.g. 5G NR) the extra usage of radio resource has various implications depending on the load conditions of the network. At low to medium offered load, the cost of using additional radio resources for DC URLLC users is tolerable, as there anyways are unused radio resources. However, as the offered load increases, usage of additional radio resources for DC URLLC users cause undesired effects, most noticeably it can cause additional scheduling queuing delays at the gNBs, which is deleterious for URLLC type of applications due to the associated strict latency budget. Considering a case where N URLLC users are to be scheduled from two gNBs with DC, then not all N users will be schedulable in the same TTI as N increases. If not all UEs were using data duplication, there would be less radio resource consumption per UE, and hence more users could be simultaneously scheduled, causing less probable experiences of queuing delays. In reality, the number of schedulable URLLC users (i.e. those with pending payloads to be sent) is a random process that is rapidly fluctuating from TTI to TTI due to the sporadic nature of URLLC traffic, as well as due to variations of radio conditions (e.g. experienced SINR) by the UEs.

Considering the above, example embodiments of the invention at least address a problem of avoiding causing unnecessary queuing delays at the gNBs for URLLC users, and in particularly preventing that URLLC users configured with DC are causing queuing delays. In accordance with the example embodiments of the invention, such problems are addressed with an enhanced scheduling frame work where a differentiated scheduling policy is prescribed for network nodes such as the MgNB and SgNB, respectively.

In short, aspects of the invention include using a differentiated scheduling policy for a URLLC UE configured with DC (using PDCP packet duplication) from the MgNB and SgNB. The idea is to use an aggressive MAC layer scheduling policy from the MgNB to the UE, while using a more relaxed scheduling strategy from the SgNB to the UE. Thereby, it is less likely that duplicated PDCP packets being routed via the SgNB will cause queuing delays for other high priority data flows that also need to be scheduled from the SgNB. Scheduling of the UE from the MgNB will therefore primarily be conducted to fulfil the 5QI (i.e. according to its priority, latency, packet loss rate). The MgNB will indicate to the SgNB the packet forward treatment that the SgNB should apply to the duplicated data that is forwarded by the MgNB and scheduled via the SgNB. The packet treatment will be indicated by signalling modified QoS parameters in terms of e.g. dedicated MAC layer scheduling settings with lower priority and potentially also a higher target packet loss rate).

As a non-limiting example, this could translate to a case where the MAC scheduler in the MgNB schedules the URLLC UE with highest priority with a packet loss rate of 1%, while the scheduler in the SgNB treats the duplicated data with medium priority and a packet loss rate of 10%. Thereby, the link from the SgNB to the UE is treated a "safety link" / "back-up link" that is used whenever possible, but without causing queuing delays to other high priority URLLC traffic that is routed primarily via the SgNB. This essentially means that the cost-benefits of DC with PDCP data duplication are more efficiently leveraged.

In the following, example embodiments of the invention are described in greater detail.

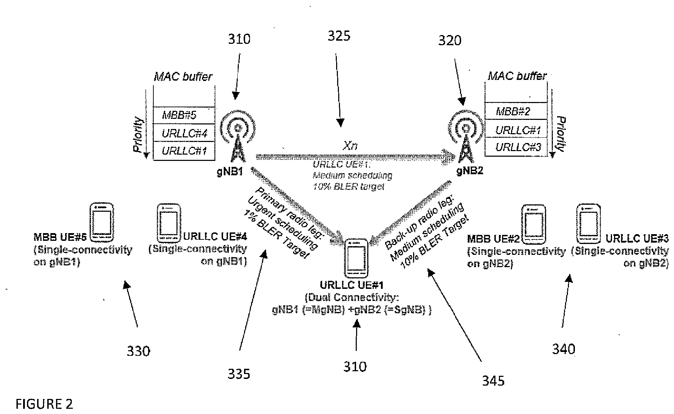

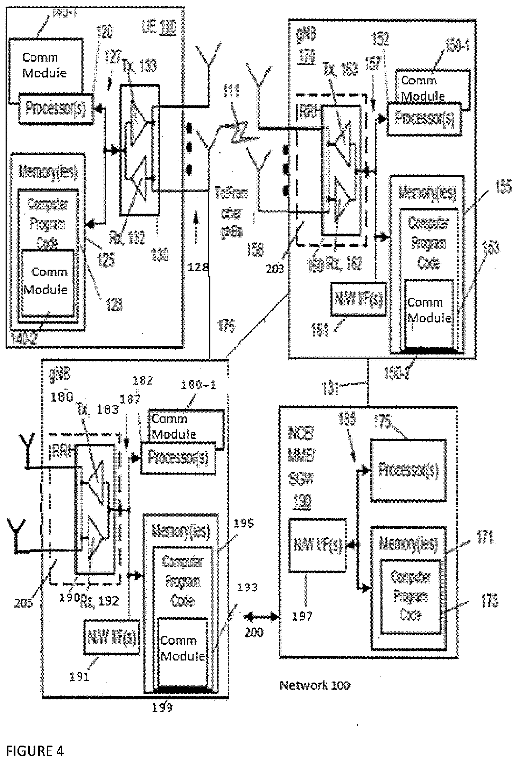

Consider a case where a UE #1, such as the UE 120 of Figure 4, is configured with multi-connectivity, e.g., DC, using PDCP data duplication, between gNB A, and gNB B, such as SgNB 120 of Figure 2.

For this case the gNB A is the MgNB, such as the gNB 170 of Figure 4, for UE #1, while gNB B is the SgNB, such as gNB 180 of Figure 4, for UE #1, such as the UE 110 of Figure 4. There are other UEs in the system being connected to those gNBs. In our example, UE #1 having a URLLC type of service in the downlink, with a latency budget of X ms at an ultra-reliable target of P. Values of X and P could (as an example) be X=1 ms or X=5 ms, with P=99.999% or P=99.9%. The values of P and X are signalled from the CN to the MgNB as part of the 5QI.

At the MgNB, the 5QI information is translated to guide the lower layer MAC scheduler. The MAC scheduler in the MgNB is instructed to schedule the data for UE #1 with high priority (as it is URLLC) and a relative low first transmission BLER target. If e.g. X=1 ms and P=99.999%, the MAC in the MgNB may aim for a first transmission BLER target of 1%, as it can afford one HARQ retransmission within the X=1ms latency target.

The MgNB duplicates the packets ofUE#1 and forwards them to the SgNB. Then for scheduling the duplicated packets at the SgNB for UE #1, in addition the MgNB signals the priority level and BLER target that the SgNB MAC layer should aim for when scheduling the UE #1. The MgNB will signal a lower relative scheduling priority for the SgNB (as compared to its priority). The MgNB could signal the priority level for instance as 5QI's Priority Level information. Potentially also a higher BLER (e.g. using 10% BLER target as compared to 1% for the MgNB link). By using the higher BLER target for the transmission from the SgNB, less radio resources will be needed to transmit the URLLC payloads. The former, combined with lower scheduling priority, means that the duplicated data for UE #1 that goes via gNB B (e.g., SgNB) have much lower priority of causing queuing delays for other URLLC users that may be served gNB B. In addition, the MgNB could provide also the indication to the SgNB about the maximum Bandwidth Part (BWP) to assign to UE#1 on the SgNB to realize an energy efficient back-up link.

In another example embodiment, if there are no other critical URLLC users that need to be served by gNB B, urgent scheduling of the duplicated URLLC payload to UE #1 will happen, as having priority over other potentially best effort eMBB traffic that gNB B may serve. Thereby, the proposed invention automatically takes advantage of DC with PDCP data duplication when feasible, while minimizing that PDCP data duplication causes unnecessary queuing delays for other URLLC users in the network.

Figure 2 illustrates a proposed method in accordance with the example embodiments which is showing the resulting prioritization at the MAC scheduler. As shown in Figure 2 there is a gNB 1310 and a gNB2 320, these gNB can be configured such as the master gNB 170 and the secondary gNB 180 as in Figure 2, respectively. As shown in Figure 2 the gNB1 and the gNB2 have an Xn interface connection between them.

This Xn interface can be an extension of the X2 interface to support the network interface for radio communication technologies such as NR-NR DC i.e., the Xn interface can, in accordance with the embodiments, support the interaction between two the gNB1 and gNB2 in NR, (whereas other DC/MC architectures part of the Multi-RAT DC/MC family of 3GPP, such as E-UTRA-NR Dual or multi-Connectivity EN-DC / EN-MC could use the X2 interface). Also as shown in Figure 2 the UE#1 310 is connected to the gNB1 and gNB2 and the UE#1 310 is performing dual connectivity with the gNB1 310 and the gNB2 320. As shown in Figure 2 the gNB1 is providing a primary radio leg 335 for urgent (e.g., URLLC) scheduling including a 1% BLER target for scheduling the URLLC transmission on this leg for the UE#1 310. The gNB2 320 is providing a back-up radio leg 345 for the dual connectivity. The back-up radio leg 345 is applying a 10% BLER target for scheduling the URLLC transmission on this leg for the UE#1 310. Further, as shown in Figure 2 there can be other UE, such as the MBB UE#5 330 and the MBB UE#4 which have single connectivity on the gNB1 310, and the MBE UE#2 and MBB UE#3 which has single connectivity on the gNB2 320. Communications to these UE can be considered non-critical over the URLLC signaling in accordance with the example embodiments. It is noted that these UE can also be configured to operate with the other dual connected UE and receive URLLC transmissions from both the gNB 1310 and the gNB2 320 in accordance with the example embodiments. Further, it is noted that the operations in accordance with the example embodiments of the invention may be performed when only one node is a gNB and other ones of operable base stations are eNBs, whereas one or more of the base stations may support NR as in the case of EN-DC, for MCG or SCG bearer split.

It should be noted, that although the proposed method has been explained for the case where the MgNB provides the primary radio leg and the SgNB provides the back-up radio leg, the example embodiments allow reversing the roles ofMgNB and SgNB. The MgNB could signal to the SgNB to treat the duplicated packets of UE#1 with high priority and low BLER target for the first transmission. In this scenario, the SgNB would send an acknowledgment to the MgNB to confirm its capability to treat the packets according to the UE's 5QI parameters and high priority.

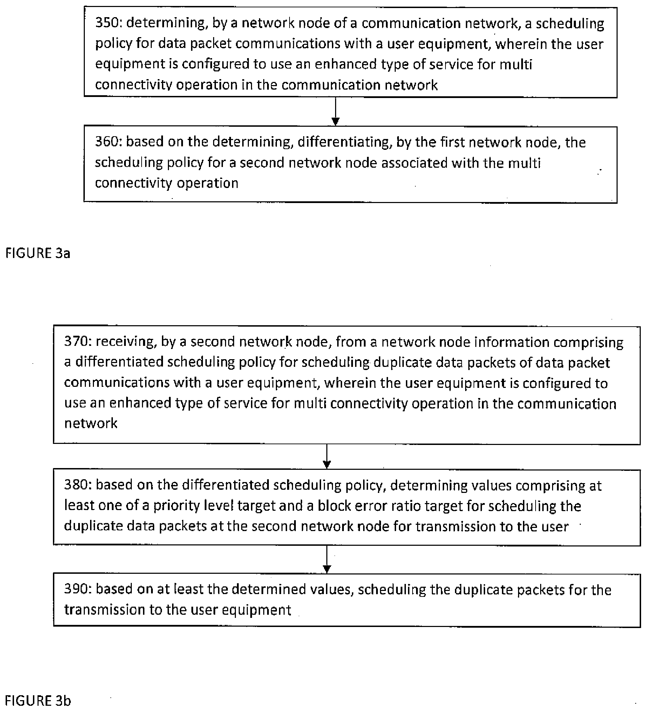

Figure 3a illustrates operations which may be performed by a network device such as, but not limited to, a network node gNB 170 as in Figure 4 or an eNB such as an MgNB. As shown in step 350 of Figure 3a there is determining, by a first network node of a communication network, a scheduling policy for data packet communications with a user equipment, wherein the user equipment is configured to use an enhanced type of service for multi connectivity operation in the communication network. Then as shown in step 360 of Figure 3a there is, based on the determining, differentiating, by the first network node, the scheduling policy for a second network node associated with the multi connectivity operation.

In accordance with the example embodiments as described in the paragraph above, the enhanced type of service comprises an ultra-reliable low latency communication type of service.

In accordance with the example embodiments as described in the paragraphs above, there is sending, by the first network node, to the second network node duplicate data packets of the data packet communications, and information comprising the differentiated scheduling policy for scheduling the duplicate data packets associated with the multi connectivity that are received at the second network node.

In accordance with the example embodiments as described in the paragraphs above, the determining is based on information received by the first network node from the communication network.

In accordance with the example embodiments as described in the paragraphs above, the received information is indicating values comprising a latency budget of X ms and a packet loss tolerance of P associated with the enhanced type of service of the user equipment, and wherein the information comprises an indication that the second network node should act as one of primary link or back-up link for the duplicate packets associated to the differentiating scheduling.

In accordance with the example embodiments as described in the paragraphs above there is, based on the values, determining a block error ratio target for the data packet communications; and using, by the first network node, the determined block error ratio for the for the data packet communications.

In accordance with the example embodiments as described in the paragraphs above, the user equipment is configured to use packet data convergence protocol data duplication for the multi connectivity operation in the communication network

In accordance with the example embodiments as described in the paragraphs above, the differentiated scheduling policy comprises at least one of a priority level target and a block error ratio target for the scheduling at the second network node.

In accordance with the example embodiments as described in the paragraphs above, the priority level target of the differentiated scheduling policy comprises one of a lower or higher priority level for the duplicate packets than a priority level target associated with the data packet communications of the first network node.

In accordance with the example embodiments as described in the paragraphs above there is, based on the first network node being a primary node for the data packet communications, and duplicate packets at the second network node are competing with packets of the data packet communications, the priority level of the competing duplicate packets of the differentiated scheduling policy is lower than a priority level associated with the packets of the data packet communications of the primary node.

In accordance with the example embodiments as described in the paragraphs above there is, based on the first network node being a backup node for the data packet communications, the priority level of any competing duplicate packets of the differentiated scheduling policy is a same as a priority level associated with the packets of the data packet communications of the backup node.

In accordance with the example embodiments as described in the paragraphs above, the block error ratio target of the differentiated scheduling policy comprises one of a higher or lower block error ratio target for the duplicate packets than a block error ratio target associated with the first network node.

In accordance with the example embodiments as described in the paragraphs above, the information comprises an indication of a maximum bandwidth to assign to the user equipment at the second network node.

In accordance with the example embodiments as described in the paragraphs above, the first network node comprises a master base station and the second network node comprises a secondary base station for the multi connectivity operation.

In accordance with the example embodiments as described in the paragraphs above there is, receiving, by the first network node, an indication from the second network node that the second network node will schedule at least some of the duplicate packets based on at least some of the values of the differentiated scheduling policy.

In accordance with the example embodiments there is a non-transitory computer-readable medium (Memory(ies) 155 of Figure 4) storing program code (Computer Program Code 153 of Figure 4), the program code executed by at least one processor (Processors 152 and/or Comm Module 150-1 and/or Comm Module 150-2 of Figure 4) to perform the operations as at least described in the paragraphs above.

In accordance with an example embodiment of the invention as described above there is an apparatus comprising: means for determining [Processor(s) 152, Comm module 150-1 and/or Comm module 150-2, and Computer Program Code 153 as in Figure 2], by a first network node [gNB 170 of Figure 4] of a communication network [Network 100 as in Figure 2], a scheduling policy for data packet communications with a user equipment [UE 110 as in Figure 4], wherein the user equipment is configured to use an enhanced type of service for multi connectivity operation in the communication network; and means, based on the determining, for differentiating [Processor(s) 152, Comm module 150-1 and/or Comm module 150-2, and Computer Program Code 153 as in Figure 2], by the first network node [gNB 170 of Figure 4], the scheduling policy for a second network node [gNB 180 as in Figure 4] associated with the multi connectivity operation.

In the example aspect of the invention according to the paragraph above, wherein at least the means for determining comprises a non-transitory computer readable medium [Memory(ies) 155 as in Figure 4] encoded with a computer program [Computer Program Code 153 of Figure 4] executable by at least one processor [Processor(s) 152, Comm module 150-1 and/or Comm module 150-2 as in Figure 4].

Figure 3b illustrates operations which maybe performed by a network device such as, but not limited to, a network node gNB 180 as in Figure 4 or an eNB. As shown in step 370 of Figure 3b there is receiving, by a second network node, from a first network node information comprising a differentiated scheduling policy for scheduling duplicate data packets of data packet communications with a user equipment, wherein the user equipment is configured to use an enhanced type of service for multi connectivity operation in the communication network. As shown in step 380 of Figure 3b there is, based on the differentiated scheduling policy, determining values comprising at least one of a priority level target and a block error ratio target for scheduling the duplicate data packets at the second network node for transmission to the user equipment. Then as shown in step 390 of Figure 4b there is, based on at least the determined values, scheduling the duplicate packets for the transmission to the user equipment.

In accordance with the example embodiments as described in the paragraph above, the enhanced type of service comprises an ultra-reliable low latency communication type of service.

In accordance with the example embodiments as described in the paragraph above, the user equipment is configured to use packet data convergence protocol data duplication for the multi connectivity operation in the communication network.

In accordance with the example embodiments as described in the paragraphs above, the priority level target of the differentiated scheduling policy comprises one of a lower or higher priority level for the duplicate packets than a priority level target associated with the data packet communications of the first network node.

In accordance with the example embodiments as described in the paragraphs above, the block error ratio target of the differentiated scheduling policy comprises one of a higher or lower block error ratio target for the duplicate packets than a block error ratio target associated with the data packet communications of the first network node.

In accordance with the example embodiments as described in the paragraphs above there is, based on the first network node being a primary node for the data packet communications, and duplicate packets at the second network node are competing with packets of the data packet communications, the priority level of the competing duplicate packets of the differentiated scheduling policy is lower than a priority level associated with the packets of the data packet communications of the primary node.

In accordance with the example embodiments as described in the paragraphs above there is, based on the first network node being a backup node for the data packet communications, the priority level of any competing duplicate packets of the differentiated scheduling policy is a same as a priority level associated with the packets of the data packet communications of the backup node.

In accordance with the example embodiments as described in the paragraphs above, the information comprises an indication of a maximum bandwidth to assign to the user equipment at the second network node.

In accordance with the example embodiments as described in the paragraphs above, the second network node comprises a secondary base station and the first network node comprises a master base station for the multi connectivity operation.

In accordance with the example embodiments as described in the paragraphs above there is, sending, by the second network node, to the first network node an indication that the second network node will schedule at least some of the duplicate packets based on at least some of the values of the differentiated scheduling policy.

In accordance with the example embodiments there is a non-transitory computer-readable medium [Memory(ies) 195 as in Figure 4] storing program code [Computer Program Code 193 as in Figure 4], the program code executed by at least one processor [Processors 182 and/or Comm Module 180-1 and/or Comm Module 199 as in Figure 4] to perform the operations as at least described in the paragraphs above.

In accordance with an example embodiment of the invention as described above there is an apparatus comprising: means for receiving [RRH 205; Processor(s) 182; Comm module 180-1 and/or Comm module 199; and Computer Program Code 193 as in Figure 4], by a second network node [gNB 180 as in Figure 2], from a first network node [gNB 170 as in Figure 4] information comprising a differentiated scheduling policy for scheduling duplicate data packets of data packet communications with a user equipment, wherein the user equipment is configured to use [Processor(s) 182; Comm module 180-1 and/or Comm module 199; and Computer Program Code 193 as in Figure 4] an enhanced type of service for multi connectivity operation in the communication network; means, based on the differentiated scheduling policy, for determining values [Processor(s) 182; Comm module 180-1 and/or Comm module 199; and Computer Program Code 193 as in Figure 4] comprising at least one of a priority level target and a block error ratio target for scheduling the duplicate data packets at the second network node [gNB 180 as in Figure 4] for transmission to the user equipment; and means, based on at least the determined values, scheduling the duplicate packets for the transmission to the user equipment.

In the example aspect of the invention according to the paragraph above, wherein at least the means for receiving, determining, and scheduling comprises a non-transitory computer readable medium [Memory(ies) 195 as in Figure 4] encoded with a computer program [Computer Program Code 193 of Figure 4] executable by at least one processor [Processor(s) 182; Comm module 180-1 and/or Comm module 199; and Computer Program Code 193 as in Figure 4].

Further, for describing devices which may be configured to perform the example embodiments of the invention as described herein, reference is made to Figure 4 for illustrating a simplified block diagram of various electronic devices that are suitable for use in practicing the example embodiments of this invention. Figure 4 shows a block diagram of one possible and non-limiting exemplary system in which the example embodiments of the invention may be practiced. In Figure 4, a user equipment (UE) 110 is in wireless communication with a wireless network 100. A UE is a wireless, typically mobile device that can access a wireless network. The UE 110 includes one or more processors 120, one or more memories 125, and one or more transceivers 130 interconnected through one or more buses 127. Each of the one or more transceivers 130 includes a receiver Rx, 132 and a transmitter Tx 133. The one or more buses 127 may be address, data, or control buses, and may include any interconnection mechanism, such as a series of lines on a motherboard or integrated circuit, fiber optics or other optical communication equipment, and the like. The one or more transceivers 130 are connected to one or more antennas 128. The one or more transceivers 130 have multi-connectivity configurations and communicate over the wireless network 100 or any other network. The one or more memories 125 include computer program code 123. The UE 110 may include a communication Comm module 140-1 which can be configured to perform the example embodiments of the invention as described herein. The Comm module 140-1, the acronym D/R referring to PDCP detection and reporting as in accordance with the example embodiments as disclosed herein, can comprise one of or both parts 140-1 and/or Comm module 140-2, which may be implemented in a number of ways. The Comm module 140-1 may be implemented in hardware, such as being implemented as part of the one or more processors 120. The Comm module 140-1 may be implemented also as an integrated circuit or through other hardware such as a programmable gate array. In another example, the Comm module 140-1 may be implemented as Comm module 140-2, which is implemented as computer program code 123 and is executed by the one or more processors 120. For instance, the one or more memories 125 and the computer program code 123 may be configured, with the one or more processors 120, to cause the user equipment 110 to perform one or more of the operations as described herein. The UE 110 communicates with gNB 170 and the gNB 180 via a wireless link 111. In accordance with the example embodiments of the invention an interface associated with this wireless link 111 can be used for Xn and/or X2 communications such as described herein.

The gNB 170 (NR/5G Node B or possibly an evolved NB) is a base station such as a secondary node base station (e.g., for NR or LTE long term evolution) that communicates with devices such as gNB 180 and UE 110 of Figure 4. The gNB 170 provides access to wireless devices such as the UE 110 to the wireless network 100. The gNB 170 includes one or more processors 152, one or more memories 155, one or more network interfaces (N/W I/F(s)) 161, and one or more transceivers 160 interconnected through one or more buses 157. Each of the one or more transceivers 160 includes a receiver Rx 162 and a transmitter Tx 163. The one or more transceivers 160 are connected to one or more antennas 158. The one or more memories 155 include computer program code 153. The gNB 170 includes a Comm module 150-1 which is configured to perform example embodiments of the invention as described herein. The Comm module 150-1 can comprise one of or both parts 150-1 and/or Comm module 150-2, which may be implemented in a number of ways. The Comm module 150-1 may be implemented in hardware, such as being implemented as part of the one or more processors 152. The Comm module 150-1 may be implemented also as an integrated circuit or through other hardware such as a programmable gate array. In another example, the duplicate D/R module 150-1 may be implemented as Comm 150-2, which is implemented as computer program code 153 and is executed by the one or more processors 152. For instance, the one or more memories 155 and the computer program code 153 are configured to cause, with the one or more processors 152, the gNB 170 to perform one or more of the operations as described herein. The one or more network interfaces 161 and 191 and the one or more transceivers 160 that have multi-connectivity configurations and communicate over the wireless network 100 or any other network. Such communication can be between the gNB 170, the gNB 180, and the UE 110 via the links 176 and 111. In addition, two or more gNB 170 may communicate with another gNB or eNB using, e.g., links 176. The links 176 may be wired or wireless or both and may implement, e.g., an X2 interface. Further the links 176 may be through other network devices such as, but not limited to an NCE/MME/SGW device such as the NCE/MME/SGW 190 of Figure 4.

The gNB 180 (NR/5G Node B or possibly an evolved NB) is a base station such as a master node base station (e.g., for NR or LTE long term evolution) that communicates with devices such as the gNB 170 and/or UE 110 and/or the wireless network 100. The gNB 180 includes one or more processors 182, one or more memories 195, one or more network interfaces (N/W I/F(s)) 191, and one or more transceivers 190 interconnected through one or more buses 187. Each of the one or more transceivers 190 includes a receiver Rx 192 and a transmitter Tx 183. The one or more transceivers 190 are connected to one or more antennas 185. The one or more transceivers 190 have multi-connectivity configurations and communicate over the wireless network 100 or any other network. The one or more memories 195 include computer program code 193. The gNB 180 also includes a Comm module 199 which is configured to perform example embodiments of the invention as described herein. The Comm module 199 may be implemented in hardware as duplicate D/R module 180-1, such as being implemented as part of the one or more processors 182. The duplicate D/R module 180-1 may be implemented also as an integrated circuit or through other hardware such as a programmable gate array. In another example, the Comm module 180-1 may be implemented as the Comm module 199, which is implemented as computer program code 193 and is executed by the one or more processors 182. For instance, the one or more memories 155 and the computer program code 153 are configured to cause, with the one or more processors 182, the gNB 180 to perform one or more of the operations as described herein. The one or more network interfaces 181 communicate over a network such as via the links 176. Two or more gNB 170 or gNB 180 may communicate with another gNB and/or eNB or any other device using, e.g., links 176. The links 176 maybe wired or wireless or both and may implement, e.g., an X2 interface. Further, as stated above the links 176 may be through other network devices such as, but not limited to an NCE/MME/SGW device such as the NCE/MME/SGW 190 of Figure 4.

The one or more buses 157 and 187 may be address, data, or control buses, and may include any interconnection mechanism, such as a series of lines on a motherboard or integrated circuit, fiber optics or other optical communication equipment, wireless channels, and the like. For example, the one or more transceivers 160 and/or 190 may be implemented as a remote radio head (RRH) 203 and/or 205, with the other elements of the gNB 170 being physically in a different location from the RRH, and the one or more buses 157 could be implemented in part as fiber optic cable to connect the other elements of the gNB 170 to a RRH. Further, in accordance with the example embodiments of the invention (RRH) 203 and/or 205 can be used for Xn and/or X2 communications, such as for the communications as described herein.

It is noted that description herein indicates that "cells" perform functions, but it should be clear that the gNB that forms the cell will perform the functions. The cell makes up part of a gNB. That is, there can be multiple cells per gNB.

The wireless network 100 may include a network control element (NCE) 190 that may include MME (Mobility Management Entity)/SGW (Serving Gateway) functionality, and which provides connectivity with a further network, such as a telephone network and/or a data communications network (e.g., the Internet). The gNB 170 is coupled via a link 131 to the NCE 190. The gNB 180 is coupled via a link 200 to the NCE 190. Further, the gNB 180 is coupled via links 176 to the gNB 170. The links 131, 176, and/or 200 may be implemented as, e.g., for S1 interface, Xn, and/or X2 communications.

The NCE 190 includes one or more processors 175, one or more memories 171, and one or more network interfaces (N/W I/F(s)) 197, interconnected through one or more buses coupled with the link 185. The one or more memories 171 include computer program code 173. The one or more memories 171 and the computer program code 173 are configured to, with the one or more processors 175, cause the NCE 190 to perform one or more operations which may be needed to support the operations in accordance with the example embodiments of the invention.

The wireless network 100 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. Note that the virtualized entities that result from the network virtualization are still implemented, at some level, using hardware such as processors 152, 182, or 175 and memories 155, 195, and 171, and also such virtualized entities create technical effects.

The computer readable memories 125, 155, 171, and 195 maybe of any type suitable to the local technical environment and may be implemented using any suitable data storage technology, such as semiconductor based memory devices, flash memory, magnetic memory devices and systems, optical memory devices and systems, fixed memory and removable memory. The computer readable memories 125, 155, 171, and 195 may be means for performing storage functions. The processors 125, 155, 171, and 195 may be of any type suitable to the local technical environment, and may include one or more of general purpose computers, special purpose computers, microprocessors, digital signal processors (DSPs) and processors based on a multi-core processor architecture, as non-limiting examples. The processors 120, 152, 175, and 182 maybe means for performing functions, such as controlling the UE 110, gNB 170, gNB 180, and other functions as described herein.

In general, the various embodiments of the user equipment 110 can include, but are not limited to, cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, as well as portable units or terminals that incorporate combinations of such functions.

In general, the various embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The word "exemplary" as may be used herein is intended to mean "serving as an example, instance, or illustration."

The foregoing description has provided by way of exemplary and non-limiting examples a full and informative description of the best method and apparatus presently contemplated by the inventors for carrying out the invention. However, various modifications and adaptations may become apparent to those skilled in the relevant arts in view of the foregoing description, when read in conjunction with the accompanying drawings and the appended *claims.*

*It* should be noted that the terms "connected," "coupled," or any variant thereof, mean any connection or coupling, either direct or indirect, between two or more elements, and may encompass the presence of one or more intermediate elements between two elements that are "connected" or "coupled" together. The coupling or connection between the elements can be physical, logical, or a combination thereof. As employed herein two elements maybe considered to be "connected" or "coupled" together by the use of one or more wires, cables and/or printed electrical connections, as well as by the use of electromagnetic energy, such as electromagnetic energy having wavelengths in the radio frequency region, the microwave region and the optical (both visible and invisible) region, as several non-limiting and non-exhaustive examples.

Furthermore, some of the features of the preferred embodiments of this invention could be used to advantage without the corresponding use of other *features.*

## Claims

1. An apparatus, comprising:
means for determining, by a first network node (110) of a communication network, a scheduling policy for data packet communications with a user equipment (130), wherein the user equipment (130) is configured to use an enhanced type of service for multi connectivity operation in the communication network, wherein said enhanced type of service for multi connectivity operation is multi connectivity with data duplication; and
means, based on the determining, for creating, by the first network node (110), a different scheduling policy for a second network node (120) associated with the multi connectivity operation as a differentiated scheduling policy, and
means for sending, from the first network node (110), to the second network node (120), information comprising the differentiated scheduling policy for scheduling duplicate data packets (125) associated with the multi connectivity operation that are received at the second network node (120),
wherein the differentiated scheduling policy comprises at least one of a priority level target and a block error ratio target for the scheduling at the second network node (120).

2. The apparatus of claim 1, wherein the enhanced type of service comprises an ultra-reliable low latency communication type of service.

3. The apparatus according to claim 1 or 2, wherein the information comprises an indication of a maximum bandwidth to assign to the user equipment (130) at the second network node (120).

4. The apparatus of any of claims 1 to 3, wherein the determining is based on information received by the first network node (110) from the communication network.

5. The apparatus of claim 4, wherein the received information is indicating values comprising a latency budget of X ms and a packet loss tolerance of P associated with the enhanced type of service of the user equipment (130), and wherein the information comprises an indication that the second network node (120) should act as one of primary link or back-up link for the duplicate packets associated to the differentiating scheduling.

6. The apparatus of any of claims 1 to 5, wherein the priority level target of the differentiated scheduling policy comprises one of a lower or higher priority level for the duplicate packets (125) than a priority level target associated with the data packet communications of the first network node (110), and wherein the block error ratio target of the differentiated scheduling policy comprises one of a higher or lower block error ratio target for the duplicate packets (125) than a block error ratio target associated with the first network node (110).

7. The apparatus according to any of claims 1 to 6, wherein the first network node (110) comprises a master base station and the second network node (120) comprises a secondary base station for the multi connectivity operation.

8. The apparatus of any of claims 1 to 7, further comprising:
means for receiving, at the first network node (110), an indication from the second network node (120) that the second network node (120) will schedule at least some of the duplicate packets (125) based on at least some of the values of the differentiated scheduling policy.

9. An apparatus, comprising:
means for receiving, at a second network node (120), from a first network node (110), information comprising a differentiated scheduling policy for scheduling duplicate data packets (125) of data packet communications with a user equipment (130), wherein the user equipment (130) is configured to use an enhanced type of service for multi connectivity operation in the communication network, wherein said enhanced type of service for multi connectivity operation is multi connectivity with data duplication;
means, based on the differentiated scheduling policy, for determining values comprising at least one of a priority level target and a block error ratio target for scheduling the duplicate data packets (125) at the second network node (120) for transmission to the user equipment (130); and
means based on at least the determined values, for scheduling the duplicate packets (125) for the transmission to the user equipment (130).

10. The apparatus according to claim 9, wherein the user equipment (130) is configured to use packet data convergence protocol data duplication for the multi connectivity operation in the communication network.

11. The apparatus according to claim 9 or 10, wherein the priority level target of the differentiated scheduling policy comprises one of a lower or higher priority level for the duplicate packets (125) than a priority level target associated with the data packet communications of the first network node (110), and wherein the block error ratio target of the differentiated scheduling policy comprises one of a higher or lower block error ratio target for the duplicate packets (125) than a block error ratio target associated with the data packet communications of the first network node (110).

12. The apparatus according to any of claims 9 to 11, wherein based on the first network node (110) being a primary node for the data packet communications, and duplicate packets (125) at the second network node (120) are competing with packets of the data packet communications, the priority level of the competing duplicate packets of the differentiated scheduling policy is lower than a priority level associated with the packets of the data packet communications of the primary node (110), and wherein based on the first network node (110) being a backup node for the data packet communications, the priority level of any competing duplicate packets (125) of the differentiated scheduling policy is a same as a priority level associated with the packets of the data packet communications of the backup node.

13. The apparatus according to any of claims 9 to 12, further comprising:
means for sending, from the second network node (120), to the first network node (110) an indication that the second network node (120) will schedule at least some of the duplicate packets (125) based on at least some of the values of the differentiated scheduling policy.

## Patentansprüche

1. Vorrichtung, die Folgendes umfasst:
Mittel zum Bestimmen einer Planungsrichtlinie für eine Datenpaketkommunikation mit einer Teilnehmereinrichtung (130) durch einen ersten Netzwerkknoten (110) eines Kommunikationsnetzwerks, wobei die Teilnehmereinrichtung (130) dazu ausgelegt ist, eine verbesserte Dienstart für einen Multikonnektivitätsdienstbetrieb im Kommunikationsnetzwerk zu verwenden, wobei die verbesserte Dienstart für einen Multikonnektivitätsdienstbetrieb eine Multikonnektivität mit Datenduplizierung ist; und
Mittel zum Erstellen einer anderen Planungsrichtlinie für einen zweiten Netzwerkknoten (120), der mit dem Multikonnektivitätsdienstbetrieb verknüpft ist, auf Basis des Bestimmens als eine differenzierte Planungsrichtlinie durch den ersten Netzwerkknoten (110), und
Mittel zum Senden von Informationen, die die differenzierte Planungsrichtlinie zum Planen von duplizierten Datenpaketen (125) umfassen, die mit dem Multikonnektivitätsdienstbetrieb verknüpft sind und am zweiten Netzwerkknoten (120) empfangen werden, vom ersten Netzwerkknoten (110) an den zweiten Netzwerkknoten (120),
wobei die differenzierte Planungsrichtlinie mindestens eines von einem Prioritätsstufenziel und einem Blockfehlerverhältnisziel für die Planung am zweiten Netzwerkknoten (120) umfasst.

2. Vorrichtung nach Anspruch 1, wobei die verbesserte Dienstart eine ultrazuverlässige Kommunikationsdienstart niedriger Latenz umfasst.

3. Vorrichtung nach Anspruch 1 oder 2, wobei die Informationen eine Anzeige einer maximalen Bandbreite umfassen, die der Teilnehmereinrichtung (130) am zweiten Netzwerkknoten (120) zuzuweisen ist.

4. Vorrichtung nach einem der Ansprüche 1 bis 3, wobei das Bestimmen auf Informationen basiert, die vom ersten Netzwerkknoten (110) vom Kommunikationsnetzwerk empfangen werden.

5. Vorrichtung nach Anspruch 4, wobei die empfangenen Informationen Werte anzeigen, die ein Latenzbudget von X ms und eine Paketverlusttoleranz von P, die mit der verbesserten Dienstart der Teilnehmereinrichtung (130) verknüpft sind, umfassen, und wobei die Informationen eine Anzeige umfassen, dass der zweite Netzwerkknoten (120) als eines von einem primären Link oder einem Backuplink für die duplizierten Pakete, die mit der Differenzierplanung verknüpft sind, fungieren sollte.

6. Vorrichtung nach einem der Ansprüche 1 bis 5, wobei das Prioritätsstufenziel der differenzierten Planungsrichtlinie eines von einer niedrigeren oder einer höheren Prioritätsstufe für die duplizierten Pakete (125) als ein Prioritätsstufenziel umfasst, das mit der Datenpaketkommunikation des ersten Netzwerkknotens (110) verknüpft ist, und wobei das Blockfehlerverhältnisziel der differenzierten Planungsrichtlinie eines von einem höheren oder einem niedrigeren Blockfehlerverhältnisziel für die duplizierten Pakete (125) als ein Blockfehlerverhältnisziel, das mit dem ersten Netzwerkknoten (110) verknüpft ist, umfasst.

7. Vorrichtung nach einem der Ansprüche 1 bis 6, wobei der erste Netzwerkknoten (110) eine Masterbasisstation umfasst und der zweite Netzwerkknoten (120) eine sekundäre Basisstation für den Multikonnektivitätsdienstbetrieb umfasst.

8. Vorrichtung nach einem der Ansprüche 1 bis 7, die ferner Folgendes umfasst:
Mittel zum Empfangen einer Anzeige vom zweiten Netzwerkknoten (120), dass der zweite Netzwerkknoten (120) mindestens einige der duplizierten Pakete (125) auf Basis von mindestens einigen der Werte der differenzierten Planungsrichtlinie plant, am ersten Netzwerkknoten (110).

9. Vorrichtung, die Folgendes umfasst:
Mittel zum Empfangen von Informationen, die eine differenzierte Planungsrichtlinie zum Planen von duplizierten Datenpaketen (125) einer Datenpaketkommunikation mit einer Teilnehmereinrichtung (130) umfassen, an einem zweiten Netzwerkknoten (120) von einem ersten Netzwerkknoten (110), wobei die Teilnehmereinrichtung (130) dazu ausgelegt ist, eine verbesserte Dienstart für einen Multikonnektivitätsdienstbetrieb im Kommunikationsnetzwerk zu verwenden, wobei die verbesserte Dienstart für einen Multikonnektivitätsdienstbetrieb eine Multikonnektivität mit Datenduplizierung ist;
Mittel zum Bestimmen auf Basis der differenzierten Planungsrichtlinie von Werten, die mindestens eines von einem Prioritätsstufenziel und einem Blockfehlerverhältnisziel zum Planen der duplizierten Datenpakete (125) am zweiten Netzwerkknoten (120) zur Übertragung zur Teilnehmereinrichtung (130) umfassen; und
Mittel zum Planen der duplizierten Pakete (125) zur Übertragung zur Teilnehmereinrichtung (130) mindestens auf Basis der bestimmten Werte.

10. Vorrichtung nach Anspruch 9, wobei die Teilnehmereinrichtung (130) dazu ausgelegt ist, für den Multikonnektivitätsdienstbetrieb im Kommunikationsnetzwerk eine Paketdatenkonvergenzprotokolldatenduplizierung zu verwenden.

11. Vorrichtung nach Anspruch 9 oder 10, wobei das Prioritätsstufenziel der differenzierten Planungsrichtlinie eines von einer niedrigeren oder einer höheren Prioritätsstufe für die duplizierten Pakete (125) als ein Prioritätsstufenziel umfasst, das mit der Datenpaketkommunikation des ersten Netzwerkknotens (110) verknüpft ist, und wobei das Blockfehlerverhältnisziel der differenzierten Planungsrichtlinie eines von einem höheren oder einem niedrigeren Blockfehlerverhältnisziel für die duplizierten Pakete (125) als ein Blockfehlerverhältnisziel umfasst, das mit der Datenpaketkommunikation des ersten Netzwerkknotens (110) verknüpft ist.

12. Vorrichtung nach einem der Ansprüche 9 bis 11, wobei darauf basierend, dass der erste Netzwerkknoten (110) ein primärer Knoten für die Datenpaketkommunikation ist und duplizierte Pakete (125) am zweiten Netzwerkknoten (120) mit Paketen der Datenpaketkommunikation konkurrieren, die Prioritätsstufe der konkurrierenden duplizierten Pakete der differenzierten Planungsrichtlinie niedriger ist als eine Prioritätsstufe, die mit den Paketen der Datenpaketkommunikation des primären Knotens (110) verknüpft ist, und wobei darauf basierend, dass der erste Netzwerkknoten (110) ein Backupknoten für die Datenpaketkommunikation ist, die Prioritätsstufe von konkurrierenden duplizierten Paketen (125) der differenzierten Planungsrichtlinie eine selbe ist wie eine Prioritätsstufe, die mit den Paketen der Datenpaketkommunikation des Backupknotens verknüpft ist.

13. Vorrichtung nach einem der Ansprüche 9 bis 12, die ferner Folgendes umfasst:
Mittel zum Senden einer Anzeige, dass der zweite Netzwerkknoten (120) mindestens einige der duplizierten Pakete (125) auf Basis von mindestens einigen der Werte der differenzierten Planungsrichtlinie plant, vom zweiten Netzwerkknoten (120) an den ersten Netzwerkknoten (110).

## Revendications

1. Appareil, comprenant :
des moyens pour déterminer, par un premier noeud de réseau (110) d'un réseau de communication, une politique d'ordonnancement pour les communications de paquets de données avec un équipement utilisateur (130), dans lequel l'équipement utilisateur (130) est configuré pour utiliser un type de service amélioré pour une opération de connectivité multiple dans le réseau de communication, dans lequel ledit type de service amélioré pour une opération de connectivité multiple est une connectivité multiple avec duplication de données ; et
des moyens pour créer par le premier noeud de réseau (110), sur la base de la détermination, une politique d'ordonnancement différente pour un deuxième noeud de réseau (120) associé à l'opération de connectivité multiple en tant que politique d'ordonnancement différenciée, et
des moyens pour envoyer, du premier noeud de réseau (110) au deuxième noeud de réseau (120), des informations comprenant la politique d'ordonnancement différenciée pour ordonnancer des paquets de données en double (125) associés à l'opération de connectivité multiple qui sont reçus sur le deuxième noeud de réseau (120),
dans lequel la politique d'ordonnancement différenciée comprend au moins l'un parmi un objectif de niveau de priorité et un objectif de taux d'erreur de bloc pour l'ordonnancement au niveau du deuxième noeud de réseau (120).

2. Appareil selon la revendication 1, dans lequel le type de service amélioré comprend un type de service de communication à faible latence ultra-fiable.

3. Appareil selon la revendication 1 ou 2, dans lequel les informations comprennent une indication d'une largeur de bande maximale à attribuer à l'équipement utilisateur (130) au niveau du deuxième noeud de réseau (120).

4. Appareil selon l'une des revendications 1 à 3, dans lequel la détermination est basée sur des informations reçues du réseau de communication par le premier noeud de réseau (110).

5. Appareil selon la revendication 4, dans lequel les informations reçues indiquent des valeurs comprenant un budget de latence de X ms et une tolérance de perte de paquets P associée au type de service amélioré de l'équipement utilisateur (130), et dans lequel les informations comprennent une indication selon laquelle le deuxième noeud de réseau (120) doit agir en tant que lien primaire ou lien de secours pour les paquets en double associés à l'ordonnancement différencié.

6. Appareil selon l'une des revendications 1 à 5, dans lequel l'objectif de niveau de priorité de la politique d'ordonnancement différenciée comprend, pour les paquets en double (125), l'un parmi un niveau de priorité inférieur ou un niveau de priorité supérieur à un objectif de niveau de priorité associé aux communications de paquets de données du premier noeud de réseau (110), et dans lequel l'objectif de taux d'erreur de bloc de la politique d'ordonnancement différenciée comprend, pour les paquets en double (125), l'un parmi un objectif de taux d'erreur de bloc supérieur ou un objectif de taux d'erreur de bloc inférieur à un objectif de taux d'erreur de bloc associé au premier noeud de réseau (110).

7. Appareil selon l'une des revendications 1 à 6, dans lequel le premier noeud de réseau (110) comprend une station de base principale, et le deuxième noeud de réseau (120) comprend une station de base secondaire pour l'opération de connectivité multiple.

8. Appareil selon l'une des revendications 1 à 7, comprenant en outre :
des moyens pour recevoir du deuxième noeud de réseau (120) sur le premier noeud de réseau (110), une indication selon laquelle le deuxième noeud de réseau (120) ordonnancera au moins certains des paquets en double (125) sur la base d'au moins certaines des valeurs de la politique d'ordonnancement différenciée.

9. Appareil, comprenant :
des moyens pour recevoir d'un premier noeud de réseau (110) sur un deuxième noeud de réseau (120), des informations comprenant une politique d'ordonnancement différenciée pour ordonnancer des paquets de données en double (125) de communications de paquets de données avec un équipement utilisateur (130), dans lequel l'équipement utilisateur (130) est configuré pour utiliser un type de service amélioré pour une opération de connectivité multiple dans le réseau de communication, dans lequel ledit type de service amélioré pour une opération de connectivité multiple est une connectivité multiple avec duplication de données ;
des moyens pour déterminer, sur la base de la politique d'ordonnancement différenciée, des valeurs comprenant au moins l'un parmi un objectif de niveau de priorité et un objectif de taux d'erreur de bloc pour ordonnancer les paquets de données en double (125) au niveau du deuxième noeud de réseau (120) pour la transmission à l'équipement utilisateur (130) ; et
des moyens pour ordonnancer, sur la base au moins des valeurs déterminées, les paquets en double (125) pour la transmission à l'équipement utilisateur (130).

10. Appareil selon la revendication 9, dans lequel l'équipement utilisateur (130) est configuré pour utiliser une duplication de données de protocole de convergence de données par paquets pour l'opération de connectivité multiple dans le réseau de communication.

11. Appareil selon la revendication 9 ou 10, dans lequel l'objectif de niveau de priorité de la politique d'ordonnancement différenciée comprend, pour les paquets en double (125), l'un parmi un niveau de priorité inférieur ou un niveau de priorité supérieur à un objectif de niveau de priorité associé aux communications de paquets de données du premier noeud de réseau (110), et dans lequel l'objectif de taux d'erreur de bloc de la politique d'ordonnancement différenciée comprend, pour les paquets en double (125), l'un parmi un objectif de taux d'erreur de bloc supérieur ou un objectif de taux d'erreur de bloc inférieur à un objectif de taux d'erreur de bloc associé aux communications de paquets de données du premier noeud de réseau (110).

12. Appareil selon l'une des revendications 9 à 11, dans lequel, si le premier noeud de réseau (110) est un noeud primaire pour les communications de paquets de données, et si les paquets en double (125) au niveau du deuxième noeud de réseau (120) sont en concurrence avec les paquets des communications de paquets de données, le niveau de priorité des paquets en double en concurrence de la politique d'ordonnancement différenciée est inférieur à un niveau de priorité associé aux paquets des communications de paquets de données du noeud primaire (110), et dans lequel si le premier noeud de réseau (110) est un noeud de secours pour les communications de paquets de données, le niveau de priorité de l'un quelconque des paquets en double en concurrence (125) de la politique d'ordonnancement différenciée est identique au niveau de priorité associé aux paquets des communications de paquets de données du noeud de secours.

13. Appareil selon l'une des revendications 9 à 12, comprenant en outre : des moyens pour envoyer, du deuxième noeud de réseau (120) au premier noeud de réseau (110), une indication selon laquelle le deuxième noeud de réseau (120) ordonnancera au moins certains des paquets en double (125) sur la base d'au moins certaines des valeurs de la politique d'ordonnancement différenciée.
